# EUROPEAN PATENT SPECIFICATION

(11) **EP 3 001 047 B1**
(45) Date of publication and mention of the grant of the patent: **10.10.2018**
(21) Application number: 15184392.7
(22) Date of filing: 09.09.2015
(51) Int. Cl.: F16B 45/02

(54) **CARABINER**
KARABINER
MOUSQUETON

(30) Priority: 26.09.2014 GB 201417019
(43) Date of publication of application: 30.03.2016
(73) Proprietor: Treemagineers Ltd, Pitlochry PH17 2QH (GB)
(72) Inventor: Cowell, Chris, Pitlochry, PH18 5TP (GB)
(74) Representative: Hamilton, Alistair

(56) References cited:
- WO-A1-2005/073571
- US-A- 5 704 668
- US-A1- 2005 071 961

## Description

The present invention relates to a racking carabiner.
A racking carabiner is a special type of carabiner that is attached to a harness of a climber or a person working at height. Its primary purpose is to provide its user with convenient access to tools or equipment by holding them securely in a convenient location when not required for use, while allowing them to be removed easily when required with one hand. Racking carabiners are typically used by people working at height (e.g., arborists, rope access technicians, building maintenance workers, etc.) as a quick attachment point to hold a tool, which will also be securely tethered to another load-bearing attachment point on the person's harness. Therefore, a racking carabiner is not a piece of safety equipment and is therefore typically only capable of supporting low loads before failure.
Nevertheless, if the racking carabiner were to break or otherwise fail, a tool might fall a short distance before being caught by its tether, which is both potentially risky and uncomfortable for the user. Racking carabiners are also used by ice climbers to carry protection devices such as ice screws. In this case, were the racking carabiner to break, the screws are not otherwise secured, and would fall and be lost. Therefore, it is preferable that a racking carabiner be made as secure as can be within the constraints imposed by reasonable cost and weight. Racking carabiners are typically a similar size to standard climbing carabiners but larger versions are available to hold more or hold larger items.
A typical known racking carabiner has a C-shaped body with a sprung gate, which when closed, forms a continuous loop with the body. The gate can be pushed open to add or remove tools from the carabiner as desired. The gate may be either a sprung wire or solid gate. A solid gate is preferable to those working in busy or cluttered environments such as arborists, as branches and other small objects cannot get caught in it. A locking arrangement for the gate may be provided to reduce the chance of the gate being pushed open accidentally, for instance by branches when moving around a tree. On the other hand, a wire gate is preferable to ice climbers as it is, for example, lighter, less likely to freeze up and allows for quick access.

EP-A-1 522 748 with its english worded family member US 2005/0071961 A1 discloses a snap-hook that has a movable finger articulated on an end of a body to close or open an access passage of the hook. The body is equipped with a guard lug attached to a top part and faces a lateral branch opposite the finger to define a groove to be inserted on a support unit to achieve immobilization of the hook. The guard lug presents a smaller length than that of a lateral branch.
It will be understood that the carabiner of EP-A-1 522 748 relies on the guard lug being able to grip a webbing component of a harness. Thus, there is a trade-off between making the carabiner secure when in use and making it easy to install or remove. The guard lug must also have sufficient stiffness to exert enough grip to make it secure, which means that it must have significant thickness in the direction along which the gripping force acts. An aim of this invention is to provide a racking carabiner that is secure and stable when installed on a harness, yet which can be installed or removed easily when required.
To this end, from a first aspect, this invention provides a racking carabiner comprising:
a body;
a closing component pivotally interconnected to the body and movable between an open condition and a closed condition in which, in the closed condition, the body and the closing component are in contact with one another at a contact location remote from the pivotal interconnection, a slot being defined between portions of the body and the closing component respectively, within which slot an attachment point of a retaining component can be trapped, and extending between the pivotal interconnection and the contact location; and in the open condition, the body and the closing component are spaced from one another at the contact location, thereby opening the slot;
a gate carried on one or other of the body and the closing component and biased towards a closed position in which it forms a closed loop with the body and the closing component, within which is defined a retaining space, the gate being displaceable from the closed position to open the loop whereby an item can be passed into or out of the retaining space.

The carabiner can be secured to a person or a piece of equipment, such as at an attachment point of a safety harness, by arranging for a component of the attachment point to be between the body and the closing component, and then moving the carabiner to the closed condition to trap the component of the attachment point within the slot. This provides firm and secure anchorage of the carabiner without reliance upon friction between parts of the carabiner and the attachment point. Non-reliance upon friction means that there is little requirement for the material of the components surrounding the slot to be stiff in bending.

A carabiner embodying the invention may further comprise a locking arrangement that can be operated to prevent movement of the closing component from the closed condition. The locking arrangement may include a fastener that can be deployed to interconnect the body and the closing component in the region of the contact location. This allows the carabiner to be positively secured in the closed condition to prevent its removal from an attachment point.

Advantageously, the closing component has a surface that faces generally upward when in normal use, and which is concave. Preferably, a lip projects from the surface. This allows the surface to be used as a location on which the sling or carrying loop of an item can be kept temporarily.

Most typically, the gate is displaced from its closed position by pivoting it about its connection to the body or the closing component, as the case may be. The gate is more usually carried on the closing component. Included are embodiments in which the gate is formed by a loop of wire. Alternatively, the gate may be formed from a solid body. Locking means may be provided, being selectively operable to prevent the gate being displaced from the closed position. The locking means can be used to prevent accidental opening of the gate, such as could be occasioned, for example, through contact with a tree branch.

The body may include a spine that extends generally vertically when the carabiner is in normal use. In such embodiments, the closing component may be pivotally connected to the spine, for example at approximately the mid-point of the spine.

From a second aspect, this invention provided an arrangement for carrying components comprising a first component such as a safety harness that has an attachment formation, which attachment formation includes a length of tensile material such as webbing; and a carabiner according to any preceding claim, the carabiner being in the closed condition with the tensile material passing through the slot.

As has been discussed, the material of the components that defines the slot need not be particularly stiff, so need not be particularly thick. This means that the webbing is not pulled significantly away from the harness when the carabiner is installed.

Preferably, the webbing is firmly gripped between the body and the closing component.

Embodiments of the invention will now be described in detail, by way of example, and with reference to the accompanying drawings, in which:
Figures 1 and 2 show a carabiner being a first embodiment of the invention;
Figures 3 and 4 show a carabiner being a second embodiment of the invention;
Figures 5 to 8 show the steps of securing the carabiner of Figure 1 into place ready for use.

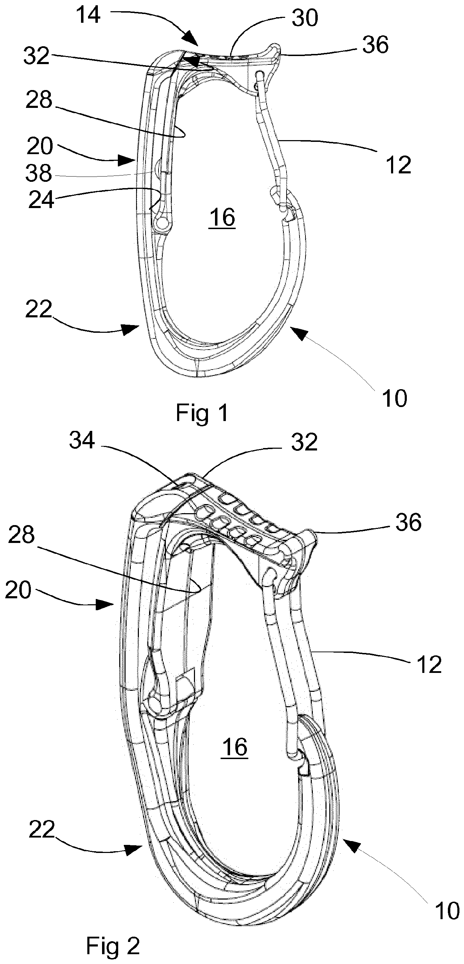

For convenience of description, the carabiner will be described in the orientation as shown in Figures 1 and 2, and terms such as "top", "bottom", "upper" and "lower" should be interpreted as referring to the carabiner in that orientation. This is the approximate orientation that the carabiner will adopt when in normal use.

With reference first to Figures 1 and 2, a racking carabiner embodying the invention includes a body 10, a gate 12 and a closing component 14. In this embodiment, each of these components is formed from a lightweight metal alloy. However, in other embodiments, the components may be made of moulded plastic material in the interest of reducing weight.

The body 10 is broadly J-shaped, with a spine that has an upper section 20 and a lower section 22. A tool carrying portion extends from the spine, and curves through approximately 180° in a plane to end approximately opposite the midpoint of the spine. At the interface between the upper and lower sections 20, 22 of the spine, a flange 24 is formed on the body 10. A pivot hole extends through the flange 24. A recess is formed in the upper section 20, extending between the flange 24 and a boss 32 close to the upper end of the upper section 20.

The closing component 14 is shaped generally as an upside-down "L", having a shaft portion 28 and a cross portion 30 that extend approximately at a right angle to one another. The shaft portion 28 of the closing component 14 has a forked end section that is connected to the body 10 by a pivot pin that passes through the forked end section and the pivot hole through the flange 24.

The closing component 14 can pivot with respect to the body 10 between a closed condition and an open condition. In the closed condition, the shaft portion 28 lies generally parallel to the upper section 20 of the spine of the body 10, and makes contact with the boss 32. With the closing component 14 in the closed condition, a slot is formed between the shaft portion 28 and the recess in upper section 20. The closing component 14 can be retained in the closed condition by a bolt 34, or other fastener or closure system, that passes through the boss 32 into a threaded hole in the closing component 14. In the absence of the bolt 34, the closing component 14 can be pivoted away from the body 10 to the open condition. The purpose of the bolt is to either permit or to prevent this pivoting movement. In other embodiments, alternative components can be provided to achieve this function.

A small projection 38 is formed on the shaft portion 28 of the closing component 14, which projects towards the upper section 20 of the spine of the body 10. In alternative arrangements, one or more projections can be provided. These may be on the shaft portion 28 of the closing component 14, as in this embodiment, on the upper section 20 of the spine of the body 10, or both. Moreover, the clamping function may be effected by indents as an alternative to or in addition to projections. Alternative embodiments may include a separate component could be used to create or enhance the projections or indents to improve the clamping function.

The cross portion 30 of the closing component 14 has an upper surface that is concave, and has an upwardly-projecting lip 36 remote from the shaft portion 28.

The gate 12 is connected to the cross portion 30 remote from the shaft portion 28. In the embodiment of Figures 1 and 2, the gate 12 is formed from a loop of wire that can pivot connected with respect to the gate and which is sprung towards a closed position. When the closing component 14 is in the closed position, the gate is sprung into contact with a nose at an end portion of the lower section 22 of the body 10. In the closed position, part of the gate enters into a groove formed in the nose to resist deflection of the gate 12 in the event that it is loaded from within the loop. In that condition, the gate 12 forms a continuous loop with the body and the closing component 14 to define a retaining space within the loop.

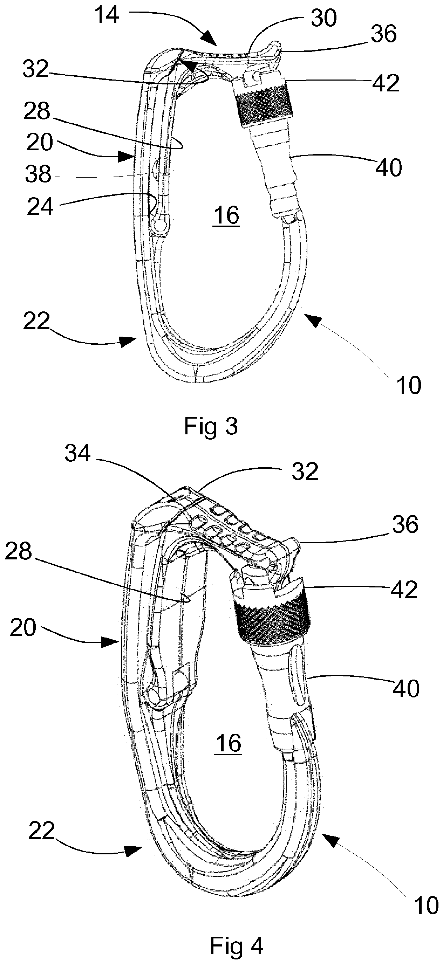

The carabiner of Figures 3 and 4 is a variation of that described with reference to Figure 1. In this embodiment, the gate is formed from a solid body 40 pivotally connected to the cross portion 30 of the closing component 14. The body has a cross-section that is circular but varies in diameter along its length. A locking thimble 42 is carried on the body 40. The locking thimble works with a ¼ turn of movement about the body 40 to lock or unlock; it is not sprung nor biased towards a particular position, and will remain in whichever position it is left in once released. A rubber O-ring is inside the thimble 42 to give a smoother turning action than would be attained by metal on metal, and also to provide some friction or resistance to give a stiffer turning action to reduce the likelihood of it being accidentally unlocked.

By suitable design of the components of the carabiner, the same body and closing component can be used in both embodiments (although some final machining specific to one embodiment or the other may be required).

In both cases, it is preferable that when in the closed position, the end of the gate 12, 40 is as close as possible (to meet the requirements for strength and security) to the nose. This minimises the difficulty of moving items past the gate, into and out of the loop of the carabiner.

The racking carabiner is intended for connection to an attachment point on a harness being worn by a person climbing or working at height. Most harnesses for industrial, arborist, and climbing use will have multiple attachment points that a racking carabiner can be attached to, allowing for several racking carabiners to be attached to the harness at the same time if desired. The attachment points differ between harnesses, especially between those that are used in different fields of application (e.g. attachment point on a climbing harness compared to those on a harness for arborism), and embodiments of the invention should ideally fit well on all attachment points. When attached to a harness it is very important that the racking carabiner is held securely, because if there is significant movement it makes it more difficult to take tools on and off.

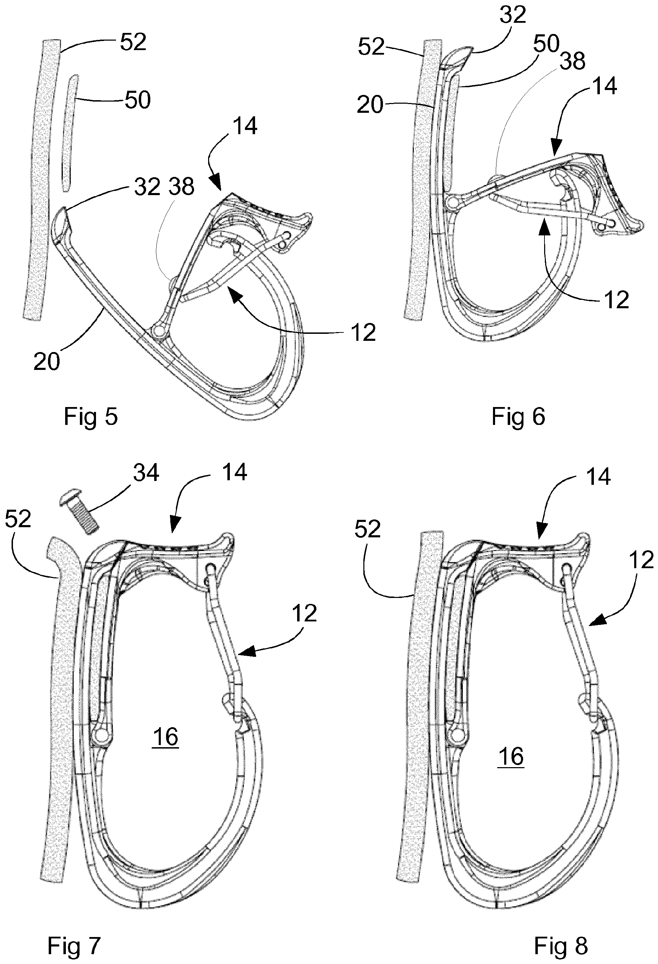

Application of the embodiment to a harness will now be described with reference to Figures 5 to 8. This can be carried out prior to sale of a harness or other article bag by a manufacturer or as a retro-fit by, for example, a retailer, employer, end user.

The attachment point comprises a length of webbing 50 that extends along a strap component 52 of a harness. The webbing 50 is secured to the strap 52 at spaced locations to form a continuous loop. When the harness is in use, the webbing extends generally horizontally when the user of the harness is standing upright.

The closing component 14 is first pivoted to the open condition, as shown in Figure 5. The upper section 20 of the spine is passed upwardly between the webbing 50 and the strap 52 so that the boss 32 is exposed above the webbing 50, as shown in Figure 6. The closing component 14 is then pivoted to the closed condition, as shown in Figure 7, and is then secured by the bolt 34. The installed carabiner is shown in Figure 8 with the webbing being within the slot formed between the shaft portion 28 and the recess in the upper section 20. In the closed condition, it is preferable that the webbing 50 is firmly clamped between the spine and the closing component 14 to prevent movement of the carabiner with respect to the harness. The projection 38 provides a localised region of high clamping pressure to enhance grip on the webbing 50. This is not, however, essential for the safe operation of the carabiner since the webbing 50 cannot be removed from the slot without first removing the bolt 34. If required, one or more elastomeric rings can be applied to the upper portion 20 of the spine to enhance its clamping of the webbing 50.

Once the carabiner has been installed, a carrying loop or strap of an item of equipment can be passed into the loop of the carabiner by displacing the gate 12, 40 away from its closed condition and then hung upon the lower section 22 of the body 10, which acts as a hook from which the item can be hung. The item can be removed for use by displacing the gate 12, 40 away from its closed condition and removing it from the loop.

The carrying loop or strap of an item can be temporarily supported on the concave upper surface of the cross portion 30 of the closing component 14. The lip 36 reduces the likelihood that the loop or strap will slide off.

It will be seen from the figures that the shape of the lower section 22 of the body 10 is not symmetrical about a hypothetical axis that extends vertically in the figure. Instead, the lowest point of the curve is close to the spine. This ensures that items hung from the carabiner lie close to the body of the user, which reduces loads on the carabiner and the user, and reduces the likelihood of the items becoming snagged.

The upper section 20 of the spine is preferably formed as thinly as possible, subject to being strong enough, in the direction extending across Figures 1 and 3. This ensures a minimal risk that the spine will press into a user's body thereby creating discomfort. It also places less strain on the webbing 50, so maximising the number of carabiners that can be attached to any given harness.

## Claims

1. A racking carabiner comprising:
a body (10);
a closing component (14) pivotally interconnected to the body (10) and movable between an open condition and a closed condition in which, in the closed condition, the body and the closing component are in contact with one another at a contact location remote from the pivotal interconnection, **characterised by** a slot being defined between portions (20, 28) of the body (10) and the closing component (14) respectively, within which slot an attachment point of a retaining component can be trapped, and extending between the pivotal interconnection and the contact location; and in the open condition, the body and the closing component are spaced from one another at the contact location, thereby opening the slot; there being a locking arrangement that can be operated to prevent movement of the closing component from the closed condition;
a gate (12) carried on either the body (10) or the closing component (14) and biased towards a closed position in which it forms a continuous closed loop with the body and the closing component, within which loop is defined a retaining space (16), the gate (12) being displacable from the closed position to open the loop whereby an item can be passed into or out of the retaining space (16).

2. A carabiner according to claim 1 in which the locking arrangement includes a fastener (34) that can be deployed to interconnect the body and the closing component in the region of the contact location.

3. A carabiner according to any preceding claim in which the closing component (14) has an upper surface which is concave.

4. A carabiner according to claim 3 in which a lip (36) projects from the surface.

5. A carabiner according to any preceding claim in which the gate (12) is displaced from its closed position by pivoting it about its connection to the body (10) or the closing component (14), as the case may be.

6. A carabiner according to any preceding claim in which the gate is carried on the closing component.

7. A carabiner according to any preceding claim in which the gate is formed by one of a loop of wire or a solid body (40).

8. A carabiner according to any preceding claim further comprising locking means being selectively operable to prevent the gate being displaced from the closed position.

9. A carabiner according to any preceding claim in which the body includes a spine (20, 22) that extends generally vertically when the carabiner is in normal use.

10. A carabiner according to claim 9 in which the closing component is connected to approximately the mid-point of the spine

11. An arrangement for carrying components comprising a first component that has an attachment formation, which attachment formation includes a length of tensile material; and a carabiner according to any preceding claim, the carabiner being in the closed condition with the tensile material passing through the slot.

12. An arrangement according to claim 11 in which the first component is a harness.

13. An arrangement according to claim 11 or claim 12 in which the tensile material is webbing (50).

14. An arrangement according to any one of claims 11 to 13 in which the tensile material is firmly gripped between the body and the closing component.

## Patentansprüche

1. Ablage-Karabiner, der Folgendes umfasst:
einen Körper (10);
eine Verschlusskomponente (14), die schwenkbar mit dem Körper (10) verbunden ist und zwischen einem geöffneten Zustand und einem geschlossenen Zustand bewegbar ist, in dem in dem geschlossenen Zustand der Körper und die Verschlusskomponente an einer Kontaktstelle miteinander in Kontakt sind, die entfernt von der Schwenkverbindung ist, **gekennzeichnet durch** einen Schlitz, der jeweils zwischen Abschnitten (20, 28) des Körpers (10) und der Verschlusskomponente (14) definiert ist, wobei in dem Schlitz ein Befestigungspunkt einer Haltekomponente eingeklemmt werden kann und der sich zwischen der Schwenkverbindung und der Kontaktstelle erstreckt; und wobei in dem geöffneten Zustand der Körper und die Verschlusskomponente an der Kontaktstelle voneinander beabstandet sind, wodurch der Schlitz geöffnet wird; wobei es eine Verriegelungsanordnung gibt, die betätigt werden kann, um eine Bewegung der Verschlusskomponente aus dem geschlossenen Zustand zu verhindern;
einen Schnapper (12), der auf dem Körper (10) oder der Verschlusskomponente (14) getragen wird und zu einer geschlossenen Position hin vorgespannt ist, in der er eine durchgehend geschlossene Schleife mit dem Körper und der Verschlusskomponente bildet, wobei in der Schleife ein Halteraum (16) definiert ist, wobei der Schnapper (12) aus der geschlossenen Position verschiebbar ist, um die Schleife zu öffnen, wodurch ein Gegenstand in den Halteraum (16) eingeführt oder daraus entnommen werden kann.

2. Karabiner nach Anspruch 1, in dem die Verriegelungsanordnung ein Befestigungsmittel (34) beinhaltet, das eingesetzt werden kann, um den Körper und die Verschlusskomponente in dem Bereich der Kontaktstelle zu verbinden.

3. Karabiner nach einem vorhergehenden Anspruch, in dem die Verschlusskomponente (14) eine obere Fläche aufweist, die konkav ist.

4. Karabiner nach Anspruch 3, in dem eine Lippe (36) von der Fläche absteht.

5. Karabiner nach einem vorhergehenden Anspruch, in dem der Schnapper (12) aus seiner geschlossenen Position verschoben wird, indem er um seine Verbindung mit dem Körper (10) oder gegebenenfalls der Verschlusskomponente (14) geschwenkt wird.

6. Karabiner nach einem vorhergehenden Anspruch, in dem der Schnapper auf der Verschlusskomponente getragen wird.

7. Karabiner nach einem vorhergehenden Anspruch, in dem der Schnapper durch eines von einer Schlaufe aus Draht oder einem festen Körper (40) gebildet ist.

8. Karabiner nach einem vorhergehenden Anspruch, der ferner Verriegelungsmittel umfasst, die selektiv betriebsfähig sind, um den Schnapper daran zu hindern, aus der geschlossenen Position verschoben zu werden.

9. Karabiner nach einem vorhergehenden Anspruch, in dem der Körper einen Rücken (20, 22) beinhaltet, der sich bei normaler Benutzung des Karabiners im Allgemeinen senkrecht erstreckt.

10. Karabiner nach Anspruch 9, in dem die Verschlusskomponente mit ungefähr dem Mittelpunkt des Rückens verbunden ist.

11. Anordnung zum Tragen von Komponenten, die eine erste Komponente umfasst, die ein Befestigungsgebilde aufweist, wobei das Befestigungsgebilde ein Stück zugfestes Material beinhaltet; und einen Karabiner nach einem vorhergehenden Anspruch, wobei der Karabiner in dem geschlossenen Zustand ist und das zugfeste Material durch den Schlitz durchgeht.

12. Anordnung nach Anspruch 11, in der die erste Komponente ein Klettergurt ist.

13. Anordnung nach Anspruch 11 oder Anspruch 12, in der das zugfeste Material Gurtband (50) ist.

14. Anordnung nach einem der Ansprüche 11 bis 13, in der das zugfeste Material fest zwischen dem Körper und der Verschlusskomponente eingespannt ist.

## Revendications

1. Mousqueton porte-matériel comprenant :
un corps (10) ;
un composant de fermeture (14) relié pivotant au corps (10) et mobile entre un état ouvert et un état fermé, dans l'état fermé, ledit corps et ledit composant de fermeture étant en contact l'un avec l'autre au niveau d'un emplacement de contact éloigné du raccordement pivotant, **caractérisée par** une fente définie entre des parties (20, 28) du corps (10) et le composant de fermeture (14) respectivement, à l'intérieur de ladite fente un point de fixation d'un composant de retenue peut être coincé et s'étendant entre le raccordement pivotant et l'emplacement de contact ; et dans l'état ouvert, ledit corps et ledit composant de fermeture étant espacés l'un de l'autre au niveau de l'emplacement de contact, ouvrant ainsi la fente ; un agencement de verrouillage étant présent et pouvant être actionné pour empêcher un mouvement du composant de fermeture depuis l'état fermé ;
un doigt (12) maintenu sur le corps (10) ou sur le composant de fermeture (14) et sollicité vers une position fermée dans laquelle il forme une boucle fermée continue avec le corps et le composant de fermeture, à l'intérieur de ladite boucle étant définie un espace de retenue (16), ledit doigt (12) pouvant être déplacé depuis la position fermée pour ouvrir la boucle ce qui permet à un article de pouvoir être passé dans ou hors de l'espace de retenue (16).

2. Mousqueton selon la revendication 1, ledit agencement de verrouillage comprenant un élément de fermeture (34) qui peut être déployé pour raccorder le corps et le composant de fermeture dans la zone de l'emplacement de contact.

3. Mousqueton selon l'une quelconque des revendications précédentes, ledit composant de fermeture (14) possédant une surface supérieure qui est concave.

4. Mousqueton selon la revendication 3, une lèvre (36) se projetant depuis la surface.

5. Mousqueton selon l'une quelconque des revendications précédentes, ledit doigt (12) étant déplacé depuis sa position fermée en le faisant pivoter autour de son raccord avec le corps (10) ou le composant de fermeture (14), le cas échéant.

6. Mousqueton selon l'une quelconque des revendications précédentes, ledit doigt étant maintenu sur le composant de fermeture.

7. Mousqueton selon l'une quelconque des revendications précédentes, ledit doigt étant formé par l'un d'une boucle de fil métallique ou d'un corps solide (40).

8. Mousqueton selon l'une quelconque des revendications précédentes, comprenant en outre un moyen de verrouillage pouvant être sélectivement actionné pour empêcher le doigt de se déplacer depuis la position fermée.

9. Mousqueton selon l'une quelconque des revendications précédentes, ledit corps comprenant une colonne (20, 22) qui s'étend généralement verticalement lors d'une utilisation normale du mousqueton.

10. Mousqueton selon la revendication 9, ledit composant de fermeture étant raccordé approximativement au point médian de la colonne.

11. Agencement permettant de porter des composants comprenant un premier composant qui possède une formation de fixation, ladite formation de fixation comprenant une longueur de matériau extensible ; et un mousqueton selon l'une quelconque des revendications précédentes, ledit mousqueton étant dans l'état fermé avec le matériau extensible passant à travers la fente.

12. Agencement selon la revendication 11, ledit premier composant étant un harnais.

13. Agencement selon la revendication 11 ou 12, ledit matériau extensible étant une sangle (50).

14. Agencement selon l'une quelconque des revendications 11 à 13, ledit matériau extensible étant fermement saisi entre le corps et le composant de fermeture.
